# EUROPÄISCHE PATENTANMELDUNG

(11) **EP 2 712 699 A1**
(43) Veröffentlichungstag der Anmeldung: **02.04.2014**
(21) Anmeldenummer: 12186769.1
(22) Anmeldetag: 01.10.2012
(51) Int. Cl.: B23K 26/38

(54) **Verfahren zum Schutz eines Bauteils, Verfahren zum Laserbohren und Bauteil**

(71) Anmelder: Siemens Aktiengesellschaft, 80333 München (DE)
(72) Erfinder: Degel, Christopher, 13507 Berlin (DE); Massa, Andrea, 12157 Berlin (DE); Wilkenhöner, Rolf, 14532 Kleinmachnow (DE); Wollnik, Adrian, 13585 Berlin (DE)

(57) **Zusammenfassung**

Durch die Verwendung von Teflonpulver können die Hohlräume eines hohlen Bauteils (1) sehr leicht und sehr schnell befüllt werden und stellen trotzdem ein ausreichenden Schutz der inneren Struktur (22) dar.

Darüber hinaus kann das Füllmaterial nach dem Laserbohren wieder sehr leicht entfernt werden.

## Beschreibung

Die Erfindung betrifft ein Verfahren zum Laserbohren und ein entsprechendes Schutzverfahren und ein Bauteil, bei dem ein Füllmaterial in das hohle Bauteil eingebracht wird.

Hochtemperaturbauteile wie Turbinenschaufeln werden im Inneren gekühlt, wobei zusätzlich durch Filmkühllöcher Luft oder Heißdampf austritt, um die Oberfläche zusätzlich zu schützen.

Daher müssen in das hohlgegossene Bauteil Durchgangsbohrungen eingebracht werden. Dabei dürfen jedoch die inneren Strukturen beim Bohren nicht oder nicht so stark beschädigt werden, wenn der Laserstrahl beim Durchbruch in das Innere des hohlen Bauteils trifft.

Oft wird ein bei Raumtemperatur hartes Material erwärmt, fluidifiziert und unter Druck in den Hohlraum eingeführt. Dann erfolgt das Laserstrahlen, wobei dann wieder durch einen aufwändigen und langen Ausbrennprozess das Material entfernt werden muss.

Es ist daher Aufgabe der Erfindung oben genanntes Problem zu lösen.

Die Aufgabe wird gelöst durch ein Verfahren gemäß Ansprüchen 1, 10 und ein Bauteil gemäß Anspruch 11.

In den Unteransprüchen sind weitere vorteilhafte Maßnahmen aufgelistet, die beliebig miteinander kombiniert werden können, um weitere Vorteile zu erzielen.

Es zeigen:
- Figur 1: schematisch eine Laserbohrvorrichtung mit einem Bauteil,
- Figur 2: eine Turbinenschaufel,
- Figur 3: eine Liste von Superlegierungen.

Die Figuren und die Beschreibung stellen nur Ausführungsbeispiele der Erfindung dar.

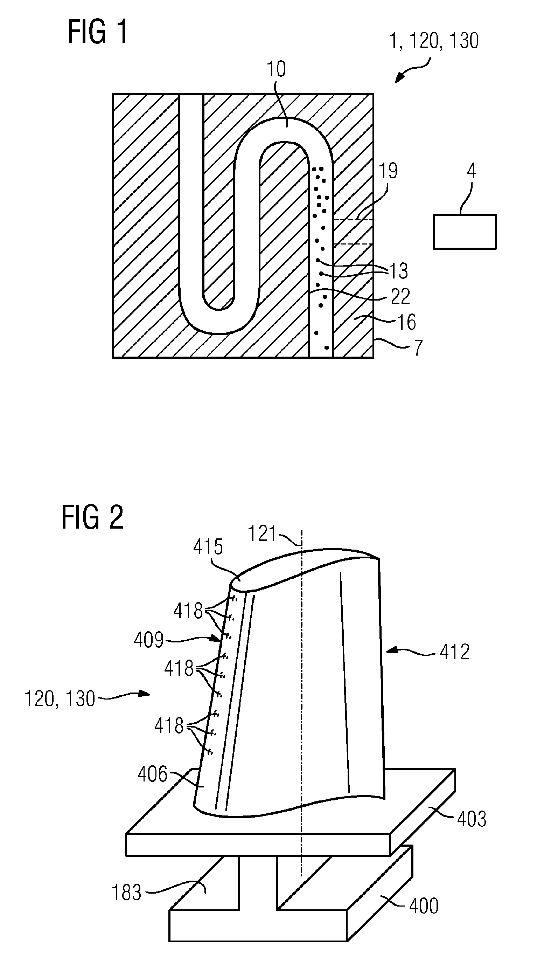

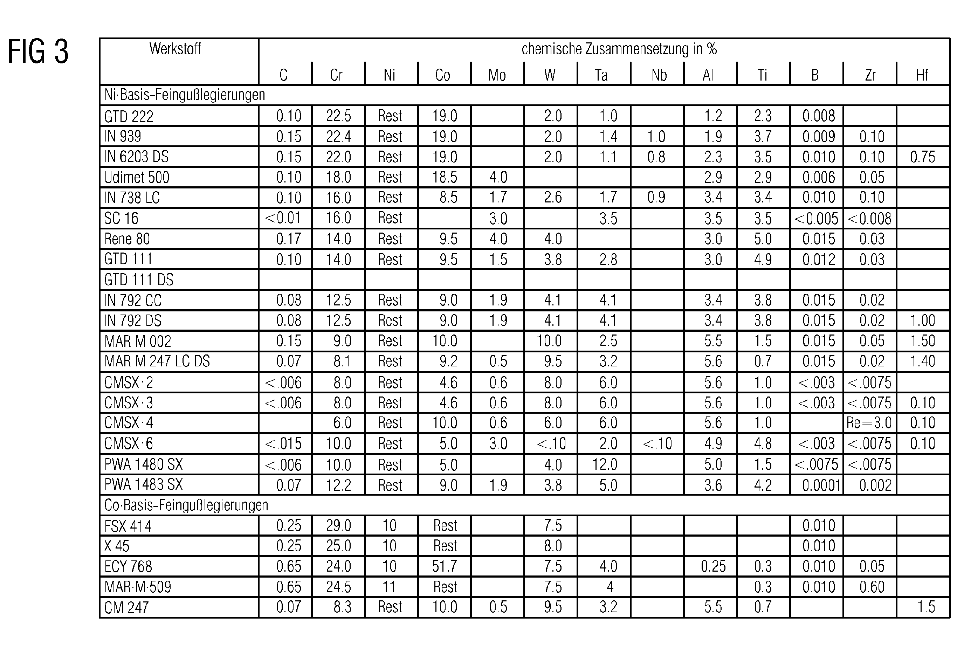

In Figur 1 ist nur als ein beispielhaftes hohles Bauteil 1 ein Ausschnitt einer Turbinenschaufel 120, 130 (Fig. 2) aus einer nickel- oder kobaltbasierten Legierung (vorzugsweise gemäß Fig. 3) gezeigt, das einen Hohlraum 10 aufweist.
Durch die Wand 16 des Hohlraums 10 des Bauteils 1, 120, 130 soll im Bereich 19, insbesondere ein Durchgangsloch 19 (im folgenden nur beispielhaft erläutert) - gestrichelt angedeutet - erzeugt werden.
Dies erfolgt durch einen Laser 4 (oder Elektronenkanone), dessen Strahlen ausgehend von der Oberfläche 7 Material der Wand 16 abträgt. Beim Durchbruch in den Hohlraum 10 könnte die innere Struktur 22 im Hohlraum 10 des hohlen Bauteils 1, 120, 130 geschädigt werden.

Um das zu verhindern wird Teflonpulver 13 in den Hohlraum 10 zumindest im Bereich des herzustellenden Durchgangslochs 19 eingebracht.
Dabei wird das Teflonpulver 13 über eine Trägerflüssigkeit in den Hohlraum 10 eingebracht werden.
Diese ist vorzugsweise wasserbasiert.
Dabei wird es mit einem Geliermittel, insbesondere Gelatine gemischt, um eine Suspension zu erzeugen, die dann vorzugsweise austrocknen oder erstarren gelassen wird.

Der Anteil des Geliermittels beträgt vorzugsweise 50g/l - 300g/l.

Ebenso kann vorzugsweise ein Tensid, insbesondere Natriumdodecylhafnat verwendet werden, ganz insbesondere mit 0,01g/l
- 0,5g/l, um die Einfüllbarkeit zu verbessern.

Das Teflonpulver 13 weist vorzugsweise eine Körnung von 10µm
- 1000µm auf und weist daher eine geringe Oberflächenaktivität aus.

Nach dem Laserbohren kann die Mischung aus Teflon 13 und Trägerflüssigkeit oder Gelatine einfach aus der Schaufel 120, 130 entfernt werden, beispielsweise in dem man die Schaufel 120, 130 im heißen Wasserbad einführt.

Das Teflonpulver 13 wirkt als Schutz, so dass bei einem Laserverfahren sowohl das Perkussier- als das Trepanier-Verfahren angewendet werden kann, um eine qualitativ hochwertige Bohrung 19 zu erzeugen und um "Recast" zu vermeiden.

Nach dem Herstellen der Löcher 19 kann man das Teflonpulver 13 mit dem Geliermittel entfernt. Dies kann durch Schütteln und/oder Rütteln unterstützt werden.

So werden auch mäanderförmige Hohlräume 10 leicht zugänglich. Vorzugsweise kann das Teflonpulver 13 wieder verwendet werden.
Ggf. ist ein deutlich kürzeres Ausbrennen im Ausbrennofen noch notwendig.

Ein Anwendungsfall besteht auch im Wiederöffnen von Löchern in einem Bauteil 1, 120, 130, wenn das Bauteils 1, 120, 130 mit bereits gebohrten Durchgangslöchern beschichtet wird und der Hohlraum 10 ebenfalls geschützt wird.

Das Teflon ist wegen seiner besonderen thermischen Eigenschaften beim Laserbohren das beste Schutzmittel der Innenräume. Dank des Teflonpulvers, allein oder in Verbindung mit einer Trägerflüssigkeit wie einem Wachs oder einer wasserbasierten Lösung, kann man auch an Schaufeln mit eingeschränkter oder nicht vorhandener Zugänglichkeit der zu schützenden Kavitäten einen besseren Schutz gewährleisten als mit Wachs ohne Teflon. Das ermöglicht es, sowohl das Perkussier- als auch das Trepanier-Verfahren zu verwenden.
Das Teflonpulver lässt sich schneller entfernen als das bisher verwendete Hartwachs. Durch die beschriebene Erfindung werden deutliche Einsparungen bei der Laserbohrprozesszeit und bei der Prozessvorbereitung und Nachbereitung realisiert. Zudem steigt die Qualität der Bohrungen, da sowohl Perkussier- als auch Trepanier-Verfahren eingesetzt werden können. Das Teflonpulver kann auch für das Bohren von Schaufeltypen eingesetzt werden, wo momentan Wachs als Schutz verwendet wird.
Der Vorteil dabei ist, dass der Innenraum durch Befüllen mit Pulver vollständig befüllt und somit besser geschützt werden kann.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Schutz eines Bauteils (1, 120, 130) beim Laserbearbeiten,
insbesondere Laserbohren,
des Bauteils (1, 120, 130) mit einem Hohlraum (10), insbesondere bei dem ein Durchgangsloch (19) durch eine Wand (16) des Hohlraums (10) des Bauteils (1, 120, 130) eingebracht wird,
bei dem der Hohlraum (10) zumindest in dem Bereich des zu bearbeitenden Bereichs (19) mit Teflonpulver (13) befüllt ist,
**dadurch gekennzeichnet, dass**
das Teflonpulver (13) mit einem Geliermittel,
insbesondere mit einer Gelatine,
in den Hohlraum (10) eingebracht wird.

2. Verfahren nach Anspruch 1,
bei dem ein wasserbasiertes Geliermittel verwendet wird.

3. Verfahren nach einem oder beiden der Ansprüche 1 oder 2,
bei dem 50g/l - 300g/l Geliermittel verwendet werden.

4. Verfahren nach einem oder mehreren der Ansprüche 1 bis 3,
bei dem ein Tensid,
insbesondere Natriumdodecylhafnat,
verwendet wird.

5. Verfahren nach Anspruch 4,
bei dem die Konzentration des Tensids 0,01g/l - 0,5g/l beträgt.

6. Verfahren nach einem oder mehreren der vorherigen Ansprüche,
bei dem 200g/l - 1000g/l Teflon verwendet wird.

7. Verfahren nach einem oder mehreren der Ansprüche 1 bis 6,
bei dem der gesamte Hohlraum (10) mit Teflonpulver (13) befüllt wird.

8. Verfahren nach Anspruch 1 bis 7,
bei dem das Teflonpulver (13) eine Körnung von 10µm - 1000µm aufweist.

9. Verfahren nach einem oder mehreren der vorherigen Ansprüche,
bei dem ein sehr kurzer Ausbrennprozess nach dem Einbringen der Durchgangslöcher (19) zur Entfernung des Materials aus dem Hohlraum (10) erfolgt.

10. Verfahren zum Laserbohren eines Bauteils (1, 120, 130),
bei dem ein Durchgangsloch (19) durch eine Wand (16) des Hohlraums (10) des Bauteils (1, 120, 130) eingebracht wird, und ein Verfahren zum Schützen des Hohlraums (10) nach einem oder mehreren der Ansprüche 1 bis 9 verwendet wird.

11. Hohles Bauteil (1, 120, 130) mit Teflonpulver (13) und Geliermittel im Hohlraum (10).

12. Hohles Bauteil (1, 120, 130) nach Anspruch 11,
bei dem das Teflonpulver (13) eine Körnung von 10µm - 1000µm aufweist.

13. Hohles Bauteil (1, 120, 130) nach einem oder beiden der Ansprüche 11 oder 12,
in dessen Hohlraum (10) Teflonpulver (13) und ein Geliermittel, insbesondere Gelatine vorhanden ist.
